# EUROPÄISCHE PATENTSCHRIFT

(11) **EP 0 815 329 B1**
(45) Veröffentlichungstag und Bekanntmachung des Hinweises auf die Patenterteilung: **02.01.2003**
(21) Anmeldenummer: 96902852.1
(22) Anmeldetag: 01.03.1996
(51) Int. Cl.: E04B 1/41, E21D 21/00, F16B 2/08, F16C 7/00, F16C 7/02

(54) **MEHRLAGIGES SCHLAUFENZUGELEMENT**
MULTILAYER TRACTION ELEMENT IN THE FORM OF A LOOP
ELEMENT DE TRACTION EN FORME DE BOUCLE A PLUSIEURS COUCHES

(30) Priorität: 17.03.1995 CH 76995
(43) Veröffentlichungstag der Anmeldung: 07.01.1998
(73) Patentinhaber: Eidgenössische Materialprüfungs- und Forschungsanstalt Empa, 8600 Dübendorf (CH)
(72) Erfinder: MEIER, Urs, CH-8603 Schwerzenbach (CH); WINISTOERFER, Andreas, CH-8618 Oetwil am See (CH)
(74) Vertreter: Troesch Scheidegger Werner AG
(86) Internationale Anmeldenummer: CH9600069
(87) Internationale Veröffentlichungsnummer: WO96029483

(56) Entgegenhaltungen:
- EP-A- 0 302 613
- EP-A- 0 566 539
- DE-A- 3 416 011
- DE-A- 3 844 746
- GB-A- 2 200 965
- US-A- 4 472 331

## Beschreibung

Die vorliegende Erfindung betrifft eine Vorrichtung zum Verankern, Schubverstärken, Befestigen und/oder Zusammenhalten von Bauteilen, Konstruktionsteilen und Bauwerken, davon ausgenommen Maschinenbauteile und -konstruktionsteile und zum Einleiten einer Zug-Kraftkomponente, umfassend mindestens ein schlaufenartiges Verankerungs- bzw. Zugelement, welches aus einem faserverstärkten Kunststoff gefertigt ist, ein Stabilisierungselement bzw. Schubverstärkungselement an Bauwerken, ein Verfahren zum Herstellen eines schlaufenförmigen Verankerungs- bzw. Zugelementes, die Verwendung einer Vorrichtung als Maueranker, Felsanker oder Anker im Brückenbau sowie ein Verfahren zum Anordnen einer Vorrichtung als Felsanker.

Sogenannte Felsanker, Anker im Tunnel-, Brücken- und Strassenbau bzw. generell im Hoch- und Tiefbau sind bestens bekannte Mittel, um Bauwerken die notwendige Festigkeit zu verleihen bzw. um diese zu stützen, zu befestigen oder zu halten. Aber auch im Maschinen- und Apparatebau werden ähnlich Mittel eingesetzt, um Teile davon zusammenzuhalten, aneinander zu befestigen, oder um Kräfte einzuleiten, zu übertragen oder abzulenken.

In der Regel werden dazu stabförmige Zugelemente verwendet, welche je endständig verankert bzw. befestigt werden, sei dies mittels verschraubter Plattenelemente, Keilelemente, Schraubverbindungen, Bolzen, mittels Kleben, etc. In der Regel wirken im montierten Zustand Zug- bzw. Druckkräfte auf das bzw. die Ankerelement(e).

Diese stabförmigen Ankerelemente bzw. Rundstäbe bzw. Rundstähle sind aus Metallen gefertigt und weisen deshalb ein hohes Gewicht auf. Auch werden in der Regel Anker verwendet, welche endständig mittels Schraubverbindungen bzw. Gewinden oder Bolzen befestigt bzw. "verankert" werden, was vor allem im Bauwesen unerwünscht ist, da Gewinde leicht durch Staub, Sand, Kies, etc. verschmutzt werden können, und somit rasch unbrauchbar werden.

In der DE-37 12 514 wird eine Vorrichtung zum Verankern von Kunststoffspanngliedern im Beton vorgeschlagen. Als Vorrichtung zum Verankern dient ein gerader, bandförmiger Ankerstab, der eine konstante Banddicke aufweist und mit einer einseitigen Profilierung versehen ist, die in eine ebenfalls einseitige, durchlaufende Profilierung des zu verankernden Spanngliedes eingreift. Der in der DE-37 12 514 vorgeschlagene Felsanker bietet wohl die Möglichkeit einer starken Gewichtsreduktion, wobei keine gleichmässige Dehnungsverteilung über den Gesamtquerschnitt der Ankerschlaufe ermöglicht wird.

In der GB-A-2 200 965 wird ein Felsanker beschrieben, bestehend aus schleifenförmigen Kettengliedern aus Metall, welche auf der Baustelle zu einem Anker beliebiger Länge zusammengesetzt werden. Dieses System soll vor allem bei geringen Platzverhältnissen eingesetzt werden. Der beschriebene Felsanker scheint wenig geeignet, da einerseits aufgrund der Metallkettenglieder die Problematik des hohen Gewichtes besteht und zum andern Kettenglieder eine relativ hohe Steifigkeit aufweisen.

In der DE 3416011 schlussendlich wird eine Pleuelstange aus Faserverbundwerkstoffen beschrieben, aufweisend ein flexibles Spannband, das aus einem faserverstärkten kunststoff gefertigt ist, und mehrere übereinander liegenden Schlaufen-bzw. Bandschichten bzw. Lagen aufweist, welches Spannband die Pleuelaugen gegen den Pleuelinnenteil spannt und somit auftretende Zugkräfte übernimmt. Grundsätzlich handelt es sich bei dem Spannband um ein einschichtiges Spannband, wobei jedoch die Möglichkeit erwähnt wird, in gewissen Verbiegungsbereichen mehrere Schichten zu verwenden. Zum einen dürfte es äusserst aufwendig sein, ein derartiges Spannband nur in den angegebenen, eng begrenzten Verbiegungszonen mehrschichtig auszubilden, und im weiteren wird keine Begründung für diese Mehrschicht-Ausbildung gegeben.

Es ist daher eine Aufgabe der vorliegenden Erfindung, eine Vorrichtung zu schaffen, mittels welcher eine einfachere, leichte, korrosionsbeständige Verankerung von Bauwerken ermöglicht wird ohne die oben geschilderten Probleme und Nachteile, oder welche dazu geeignet ist, ebenfalls bei der Herstellung von Maschinen und Konstruktionsteilen zum Befestigen, Halten und Zusammenhalten verwendet zu werden.

Beim Anlegen von sehr hohen Zugkräften hat es sich nun gezeigt, dass diese schlaufenförmigen Ankerzugelemente, im Bereich der endständigen Schlaufenbogen, unter Zugbeanspruchung infolge Spannungskonzentration, vorzeitig versagen. Unter anderem ergibt sich bei faserverstärkten Schlaufen im Bereich der endständigen Zugschlaufen bei zu geringem Querschnitt bzw. bei zu hohen angelegten Kräften ein Versagen, d.h. die endständigen Zugschlaufen bzw. Schlaufenbogen bilden das kritische Teil des schlaufenförmigen Elementes. Wohl kann durch Erhöhen der Dicke bzw. des Querschnittes des Schlaufenbandes die Zugkraft etwas erhöht werden, prozentual jedoch nimmt die Belastbarkeit im Bereich der endständigen Zugschlaufen ab im Vergleich zu derjenigen in den Längsbändern. Damit bringt eine Querschnittserhöhung nicht die gewünschte Verbesserung in bezug auf Zugfestigkeit.

Es ist deshalb eine weitere wichtige Aufgabe der vorliegenden Erfindung eine Vorrichtung mit schlaufenförmigem Zugelement zu schaffen, bei welcher die Zugtraglast, speziell im Bereich der endständigen Zugschlaufen, entscheidend verbessert werden kann, ohne dass der Schlaufenquerschnitt vergrössert werden muss.

Die erfindungsgemäss gestellten Aufgaben werden mittels einer Vorrichtung gemäss dem Wortlaut nach Anspruch 1 gelöst.

Vorgeschlagen wird, dass anstelle beispielsweise der üblicherweise verwendeten, stabförmigen Ankerzugelemente bzw. Rundstähle längsausgedehnte, schlaufenförmige Zugelemente verwendet werden, welche im Bereich der beiden endständigen Schlaufenbogen befestigt bzw. verankert werden.

Diese schlaufenförmigen Ankerzugelemente werden aus verstärkten Kunststoffen, wie sogenannten Verbundwerkstoffen, gefertigt, womit eine wesentliche Gewichtsreduktion und Korrosionsbeständigkeit erzielt werden können. Selbstverständlich ist aber auch nach wie vor eine Fertigung aus Stahl möglich. Ein wesentlicher Vorteil dieser schlaufenförmigen Ankerelemente liegt darin, dass das endständige Befestigen bzw. Verankern gewindefrei erfolgen kann, was vor allem auf Baustellen sehr erwünscht ist.

Das schlaufenförmige Verankerungs- bzw. Zugelement weist mehrere übereinanderliegende nicht aneinanderhaftende Schlaufenschichten bzw. - lagen auf. Dabei handelt es sich um dünne Lagen bzw. Schichten, damit der Gesamtquerschnitt des Schlaufenbandes, gebildet durch die mehreren Lagen bzw. Schichten, ebenfalls relativ dünn gehalten werden kann. In Theorie und Praxis hat es sich nämlich gezeigt, dass bei gleichem Gesamtquerschnitt des Schlaufenbandes die Zugkraft bzw. die Zugfestigkeit des schlaufenförmigen Elementes wesentlich erhöht werden kann, wenn das Band durch mehrere übereinanderliegende nicht aneinanderhaftende Schichten bzw. Lagen gebildet wird, anstelle eines einzigen, einlagigen Schlaufenbandes.

Das erfindungsgemäss vorgeschlagene, schlaufenförmige Element ist längsausgedehnt und weist je endständig, vorzugsweise eine gebogene, wenigstens nahezu halbkreisförmige Zugschlaufe auf, welche im montierten Zustand auf einem Lager- oder Verankerungsorgan aufliegen kann. Allerdings kann die je endständige Schlaufe auch beispielsweise je zwei viertelkreisförmige Schlaufensegmente aufweisen, wie dies unter Bezug auf die nachfolgenden Ausführungen zu den beigefügten Figuren näher erläutert wird. Die Vielzahl der erwähnten Schlaufenschichten bzw. Lagen werden durch ein einziges Band gebildet, welches mehrfach übereinander geschlauft ist, wobei die beiden Enden des Bandes je mit der direkt benachbarten Schlaufenschicht verbunden sind. Dieses Verbinden kann durch Schweissen, Kleben, Vernieten, etc. erfolgen. Ebenso ist es möglich, das innere Ende lose zu belassen und das äussere Ende nur schwach, beispielsweise mittels eines flexiblen bzw. elastischen Klebers an der darunterliegenden, benachbarten Schicht zu befestigen, welche Befestigung nach Spannen des schlaufenförmigen Elementes entweder gedehnt wird oder gänzlich unterbrochen wird.

Damit die Erhöhung der Zugfestigkeit des schlaufenförmigen Elementes infolge der Verwendung von mehreren Lagen bzw. Schichten wirksam wird, ist es insbesondere im Bereich der beiden endständigen Zugschlaufen wesentlich, dass die übereinanderliegenden Schichten bzw. Lagen nicht aneinanderhaftend ausgebildet sind. Gemäss einer Ausführungsvariante ist es sogar möglich, im Bereich der endständigen Zugschlaufen bzw. halbkreisförmig ausgebildeten Bogen zwischen den einzelnen Lagen bzw. Schichten eine Zwischenschicht, beispielsweise aus Teflon, vorzusehen, damit die einzelnen Schichten bzw. Lagen beim Auftreten hoher Zugkräfte aufeinander bzw. aneinander noch besser gleiten können. Selbstverständlich sind anstelle von Teflon auch andere Materialien verwendbar, welche einerseits sicherstellen, dass keine Haftung zwischen den Lagen auftritt, und andererseits ein möglichst reibungsloses Gleiten der einzelnen Schichten an- bzw. aufeinander ermöglichen. Um insbesondere bei schlaufenförmigen Elementen mit mehrfach geschlauftem Band die Befestigung bzw. Verankerung des äusseren Bandendes weniger zu beanspruchen kann es aber auch vorteilhaft sein, das Gleiten der Schichten in den endständigen Zugschlaufen eher zu verringern bzw. zu variieren, beispielsweise durch Beschichten der Schlaufenschichten oder durch Einlegen von Folien mit erhöhtem Reibungskoeffizienten. Denkbar ist auch im radial äusseren Bereich der Endschlaufen die Reibung zwischen den Schichten zu erhöhen, gegen die Mitte hin zu reduzieren bzw. die Gleitung zu erhöhen, um dann radial innen eher wieder Folien bzw. Zwischenschichten vorzusehen, welche eine erhöhte Reibung ergeben.

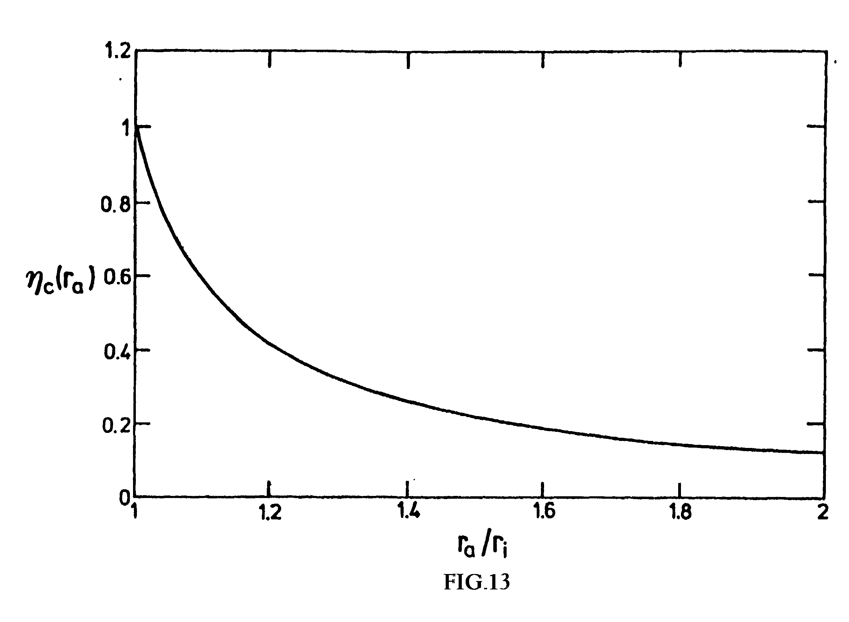

Aufgrund von Experimenten konnte festgestellt werden, dass mit zunehmender Dicke der Zugschlaufen im endständigen Umlenkbereich die Zugfestigkeit, verglichen mit derjenigen der im wesentlichen geraden Längspartien derselben Schlaufen, verhältnismässig stark abnimmt. In der in Figur 13 dargestellten Graphik ist die Effizienz der Krafteinleitung in Funktion der Dicke der Zugschlaufe bzw. in Funktion der Radienverhältnisse dargestellt, wobei rₐ der äussere Radius der Zugschlaufe im Endbereich und rᵢ der innere Radius der Zugschlaufe im Endbereich bedeutet. Dabei ergibt sich aus dem in Fig. 13 dargestellten Diagramm, dass bereits bei einem Radienverhältnis von ca. 1,2 die Effizienz der Krafteinleitung, im wesentlichen entsprechend der Zugfestigkeit weniger als 50% beträgt, verglichen mit derjenigen im Bereich des geraden, längsausgedehnten Zugelementes. Damit wird nun aber deutlich, dass bei mehr oder weniger gleichbleibender Dicke des Zugelementes, jedoch der Wahl mehrerer Schichten, die Effizienz der Krafteinleitung bzw. die Zugfestigkeit des Zugelementes im Endbereich wesentlich gesteigert werden kann.

Anhand eines konkreten Beispieles konnte dieser Sachverhalt erhärtet werden:
1) Systemtraglast bei einer Strangschlaufe, bestehend aus einem einzigen Laminat mit folgender Geometrie:
   Dicke des Laminates: 2 mm
   Breite der Schlaufe: = 10 mm
   Innenradius rᵢ: = 10 mm
   Fmax = maximale Traglast: = 23,3 kN
2) Systemtraglast einer Strangschlaufe analog zu 1), bestehend jedoch aus acht Schichten ohne Verbund:
   Fmax = maximale Traglast: = 46,2 kN

Damit ergibt sich eine mehr als doppelt so hohe, maximale Traglast, womit der Vorteil der erfindungsgemäss vorgeschlagenen Ausbildung des Zugbandes erhärtet ist.

Die einzelnen Lagen bzw. Schichten des schlaufenförmigen Verankerungs- bzw. Halteelementes können aus einem faserverstärkten Kunststoff bzw. einem sogenannten Verbundwerkstoff gefertigt sein, wie insbesondere einem kohlenstoffaser-verstärkten Verbundwerkstoff. Selbstverständlich ist es auch möglich, anstelle von Kohlenstoffasern andere Verstärkungsfasern zu verwenden; letztlich ist es aber auch möglich, die einzelnen Schichten und Lagen beispielsweise aus Metall herzustellen.

Die erfindungsgemäss vorgeschlagenen Vorrichtungen eignen sich insbesondere zum Verankern von Bauwerken im Strassen-, Brücken- oder Tunnelbau, beispielsweise in Form von sogenannten Felsankern. Die erfindungsgemäss vorgeschlagenen Vorrichtungen eignen sich aber beispielsweise auch zum Stabilisieren von Hochbauten, wie Häusern, Kirchen und dgl. sowie in Bau- oder Maschinenteilen als Element für das Uebertragen von Zug-Kraftkomponenten und zum Dämpfen von auftretenden, schwingenden Zugbelastungen. Als Beispiel hierzu sei eine Pleuelstange erwähnt, welche ein erfindungsgemäss vorgeschlagenes schlaufenförmiges Halteelement aufweist. Auch zum Stabilisieren von Bauwerken, wie beispielsweise von Bauwerken in erdbebengefährdeten Zonen oder von sanierungsbedürftigen Bauwerken, sowie von Dachkonstruktionen, usw. eignen sich die erfindungsgemäss vorgeschlagenen, schlaufenförmigen Halteelemente.

Den Einsatzmöglichkeiten sind keine Grenzen gesetzt, da überall dort, wo Zugkräfte auftreten, die Erfindung sinnvoll eingesetzt werden kann. Sei dies beispielsweise zum Verhindern des Durchbiegens eines Maschinenrahmens, wie beispielsweise eines Webschaftes oder aber zur Erhöhung der Festigkeit und Steifigkeit in einer Bodenkonstruktion in einem Flugzeug.

Im übrigen sei auf den Wortlaut der abhängigen Ansprüche 2 - 9 verwiesen.

Weiter vorgeschlagen wird ein Verfahren zum Herstellen eines schlaufenförmigen Verankerungs- bzw. Halteelementes, insbesondere geeignet für eine erfindungsgemässe Vorrichtung. Dabei wird ein dünnes, längsausgedehntes Band mehrmals um zwei voneinander beabstandete Auflageorgane geschlauft und die beiden Enden des Bandes werden je mit derjenigen Schicht bzw. Lage des Bandes, auf welchem das jeweilige Ende auf- bzw. anliegt, mittels Schweissen, Kleben, Vernieten, etc. verbunden. Die Enden des längsausgedehnten Bandes können aber auch lose belassen werden oder mittels eines flexiblen bzw. elastischen Klebers mit der am Ende anliegenden Schicht verbunden werden. Damit das Band um die beiden endständigen Halteorgane geschlauft werden kann, muss es über ausreichende Flexibilität bzw. Elastizität verfügen, damit im Bereich der endständigen Zugschlaufen kein vorzeitiges Versagen auftreten kann. Dies kann entweder dadurch erreicht werden, indem das Band sehr dünn ausgebildet ist, ein Material verwendet wird, welches bei dünner Wandstärke relativ hohe Flexibilität aufweist, wie beispielsweise ein Blechband, oder aber, dass das Bandmaterial aus einem thermoplastischen oder nicht ausgehärteten duromeren Matrixmaterial besteht, welches nach dem Herstellen und Spannen des schlaufenförmigen Verankerungs- bzw. Zugelementes, beispielsweise durch Nachtempern, teilweise vernetzt bzw. leicht versteift werden kann. So ist es beispielsweise möglich, ein längs ausgedehntes Band aus einem faserverstärkten Thermoplasten oder Duroplasten herzustellen, welch letzterer nach wie vor thermoplastische Eigenschaften aufweist und entsprechend fliessfähig ist und somit eine gewisse Flexibilität aufweist. Dieses Band wird um die endständigen Halteorgane geschlauft, die beiden Enden mit der daran anstossenden Schicht verschweisst und anschliessend, falls erwünscht, das so hergestellte Band bei erhöhter Temperatur nachgetempert, wodurch bei Verwendung eines Duromeren mittels Vernetzung innerhalb der Bandmatrix eine gewisse Steifigkeit des schlaufenförmigen Verankerungs- bzw. Halteelementes erhalten werden kann, falls dies erforderlich ist.

Damit die einzelnen Schichten, insbesondere im Bereich der endständigen Zugschlaufen aneinander gleiten können, ist es vorteilhaft, entweder im Bereich der endständigen Zugschlaufen zwischen den Schichten eine Zwischenschicht, beispielsweise aus Teflon anzuordnen, oder aber das Band vor dem Erstellen des schlaufenförmigen Elementes mit einem Material zu beschichten, welches einerseits Haftung zwischen den Schichten verhindert und andererseits gute Gleiteigenschaften aufweist.

Selbstverständlich handelt es sich bei der oben erwähnten Methode zum Herstellen eines schlaufenförmigen Verankerungs- bzw. Halteelementes nur um ein Beispiel, welches auf vielfältigste Art und Weise ergänzt bzw. abgeändert werden kann.

Um nun ein derartig hergestelltes, schlaufenförmiges Verankerungs- bzw. Halteelement, beispielsweise als Felsanker verwenden zu können, muss sichergestellt sein, dass das im Bohrloch eingeführte Zugschlaufenende auch verankert werden kann. Dies kann beispielsweise dadurch erfolgen, dass das Verankerungs- bzw. Halteelement in das Bohrloch eingeführt wird, und wie bei herkömmlichen Rundstahlfelsankern mit einer Vergussmasse im Bohrloch vergossen wird. Es ist aber auch möglich im Bereich des einzuführenden Zugschlaufenendes feder- bzw. keilartige Elemente anzuordnen, welche sich leicht in das Bohrloch einführen lassen, jedoch ein Zurückziehen aus dem Bohrloch durch entsprechende Verkeilung verunmöglicht wird. Auf das Anordnen im speziellen von Verankerungs- bzw. Halteelementen, beispielsweise in Felsankern, wird nachfolgend unter Bezug auf die beigefügten Figuren eingegangen.

Die Erfindung wird nun anschliessend beispielsweise unter Bezug auf die beigefügten Figuren näher erläutert.
Dabei zeigen:
- Fig.1: in Perspektive, schematisch dargestellt, ein schlaufenförmiges Verankerungs- bzw. Zugelement,
- Fig. 2 und 2a: im Schnitt den endständigen Schlaufenbogen einer einlagigen Zugschlaufe,
- Fig. 3 und 3a: im Schnitt den endständigen Schlaufenbogen einer erfindungsgemäss ausgebildeten mehrlagigen Zugschlaufe,
- Fig. 4: einen Felsanker im Längsschnitt, umfassend ein schlaufenförmiges Verankerungselement entsprechend Fig. 1,
- Fig. 5: im Querschnitt das Ende eines Bohrloches eines Felsankers analog Fig. 4, umfassend Mittel zum Festlegen des schlaufenförmigen Elementes im endständigen Bereich des Bohrloches,
- Fig. 6a und 6b: schematisch dargestellt das Anordnen eines schlaufenartigen Schubverstärkungselementes an einem Betonbauwerk mit Tragfunktionen,
- Fig. 7a und 7b: in Perspektive und im Längsschnitt ein schlaufenförmiges Verankerungs- bzw. Zugelement, umfassend mehrere, abgesehen von den Enden nicht verbundene Bandschichten bzw. Lagen,
- Fig. 7c: ein schlaufenförmiges Verankerungselement ähnlich Fig. 7a und 7b jedoch mit losen Enden,
- Fig. 7d: ein schlaufenförmiges Verankerungselement analog Fig. 7a und 7b mit einer äusseren elastischen Umhüllung,
- Fig. 8: im Querschnitt ein schlaufenförmiges Verankerungs-bzw. Halteelement mit zwischen den einzelnen Schichten bzw. Lagen angeordnetem Gleitmaterial,
- Fig. 9: eine mögliche Ausführungsvariante der erfindungsgemäss dargestellten Schlaufen bzw. einzelnen Lagen der Schlaufen in Fig. 7 in bezug auf die Bandbreite,
- Fig. 10: das Anordnen einer erfindungsgemäss ausgebildeten Zugschlaufe,
- Fig. 11: eine weitere Verwendung eines erfindungsgemässen schlaufenförmigen Verankerungs- bzw. Halteelementes anhand des Beispieles einer Pleuelstange,
- Fig. 12: die Verwendung der erfindungsgemässen, schlaufenförmigen Halteelemente für die Stabilisierung einer Dachkonstruktion von einem sanierungsbedürftigen Bauwerk, und
- Fig. 13: graphisch dargestellt die Effizienz der Krafteinleitung in Funktion der Dicke einer Zugschlaufe bzw. in Funktion der Radienverhältnisse.

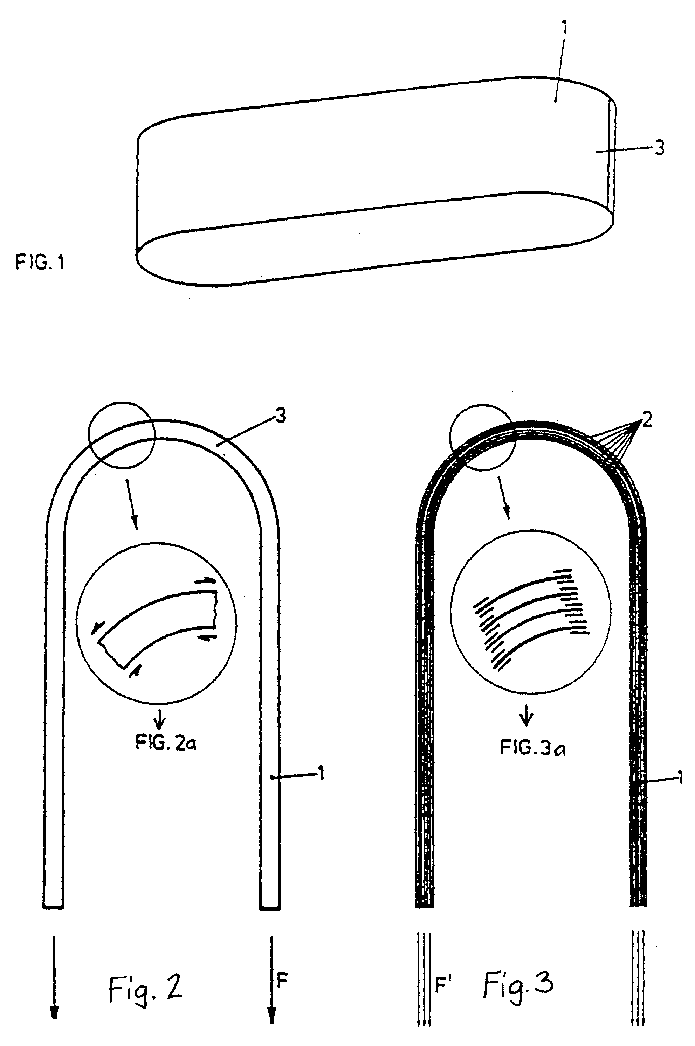

Fig. 1 zeigt in Perspektive ein erfindungsgemässes, längsausgedehntes, schlaufenförmiges Verankerungs- bzw. Halteelement 1, welches jeweils endständig halbkreisförmig ausgebildete Zugschlaufenenden bzw. Rundbögen 3 aufweist.

Fig. 2 und 3 stellen schematisch je einen endständigen Schnitt durch eine Zugschlaufe eines Halteelementes dar. Dabei zeigt Fig. 2 eine endständige Zugschlaufe 3 des Halteelementes 1, umfassend nur eine einzige Lage, wie vergrössert in Fig. 2a erkennbar. Demgegenüber zeigt Fig. 3 ein mehrlagig ausgebildetes Halteelement 1, umfassend mehrere Lagen bzw. Schichten 2, wie erneut in Vergrösserung in Fig. 3a deutlich erkennbar. Zudem ist in den beiden Vergrösserungsfiguren 2a und 3a durch Pfeile, die an den einzelnen Lagen bzw. Schichten auftretende Zug- bzw. Schubkräfte dargestellt, wobei sofort erkennbar ist, dass durch die relativ grosse Schichtdicke in Fig. 2a bei Auftreten von Zugkräften ein Versagen der Zugschlaufe wesentlich wahrscheinlicher ist als beim Verwenden von mehreren Schichten bzw. Lagen, wie in Fig. 3a dargestellt.

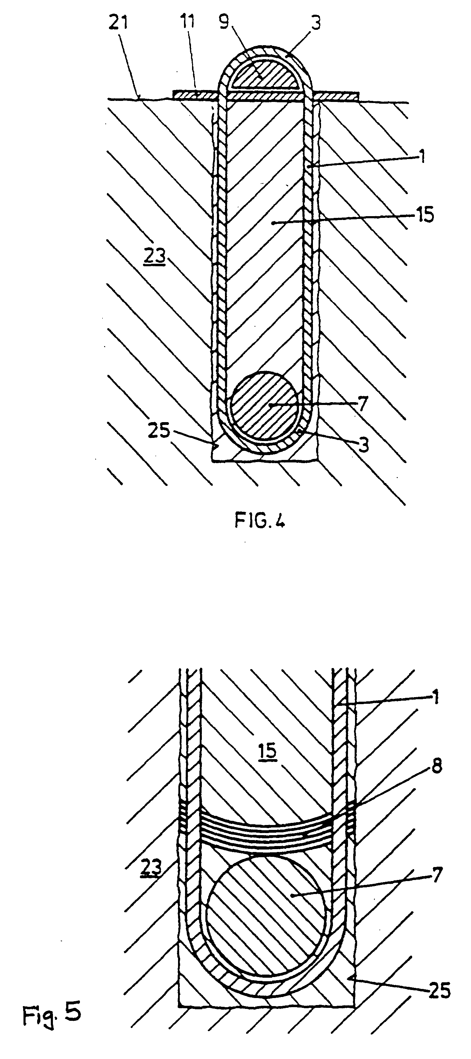

In Fig. 4 ist ein derartiges schlaufenförmiges Verankerungs- bzw. Halteelement 1 als Felsanker verwendet, im montierten Zustand im Längsschnitt dargestellt. Dabei ist das Verankerungselement 1 in einem Bohrloch 25 in einem Untergrund 23 eingelassen angeordnet. Der im Bohrloch 25 endständige Zugschlaufenbogen 3 des Verankerungselementes 1 verläuft um ein beispielsweise zylinder- oder stabförmiges Halteelement 7, mittels welchem das Verankerungselement bei der Montage eingeführt bzw. provisorisch verankert worden ist. An der Oberfläche 21 des Untergrundes wird der aus dem Untergrund herausragende Zugschlaufenbogen 3 mittels eines Keilelementes 9 bzw. einer Halteplatte 11 befestigt bzw. verankert, nachdem das Bohrloch 25, beispielsweise mit einer Mörtel- oder Vergussmasse 15 ausgefüllt worden ist.

Wie aus Fig. 4 erkennbar, ist an sich die Funktionsweise eines erfindungsgemäss ausgebildeten, schlaufenförmigen Verankerungselementes 1 analog derjenigen einer herkömmlichen Verankerungsvorrichtung, welche einen Rundstahlanker aufweist. Auch in letzterem Falle wird nach Einbringen und Vergiessen des Rundstabes dieser von aussen her verankert bzw. befestigt, beispielsweise mittels des Anbringens einer Grundplatte, welche über ein Gewinde über den Rundstab angeordnet und mittels einer Schraubenmutter befestigt wird.

In Fig. 4 handelt es sich wohl um einen sogenannten Felsanker, doch kann ein schlaufenförmiges Verankerungs- bzw. Halteelement 1, wie in Fig. 1 dargestellt, auch in anderen Verankerungssystemen verwendet werden, wie allgemein üblich im Hoch- und Tiefbau. Derartige Halteelemente bzw. Zugschlaufen können z.B. auch zum Vorspannen von Betonquerschnitten verwendet werden, insbesondere zur nachträglichen Schubverstärkung, beispielsweise von Tragfunktionen erfüllende Bauwerksteilen, wie Brücken, Deckenelementen und dgl. In diesem Zusammenhang sei verwiesen auf die internationale Patentanmeldung WO93/20296, in welcher die Verankerung von Vorspannmitteln zur Schubverstärkung beschrieben wird.

In Fig. 5 ist im Schnitt ein Ende eines Bohrloches 25 dargestellt, analog des Bohrloches aus Fig. 4. Wiederum wird das schlaufenförmige Element 1 endständig, beispielsweise durch ein zylinder- oder stabförmiges Zugelement 7 gehalten, wobei weiter ein sich im Bohrloch festkrallendes, federndes Halteelement 8 angeordnet ist, welches leicht in das Bohrloch 25 einführbar ist, jedoch ein Zurückziehen des schlaufenförmigen Verankerungselementes 1 verunmöglicht.

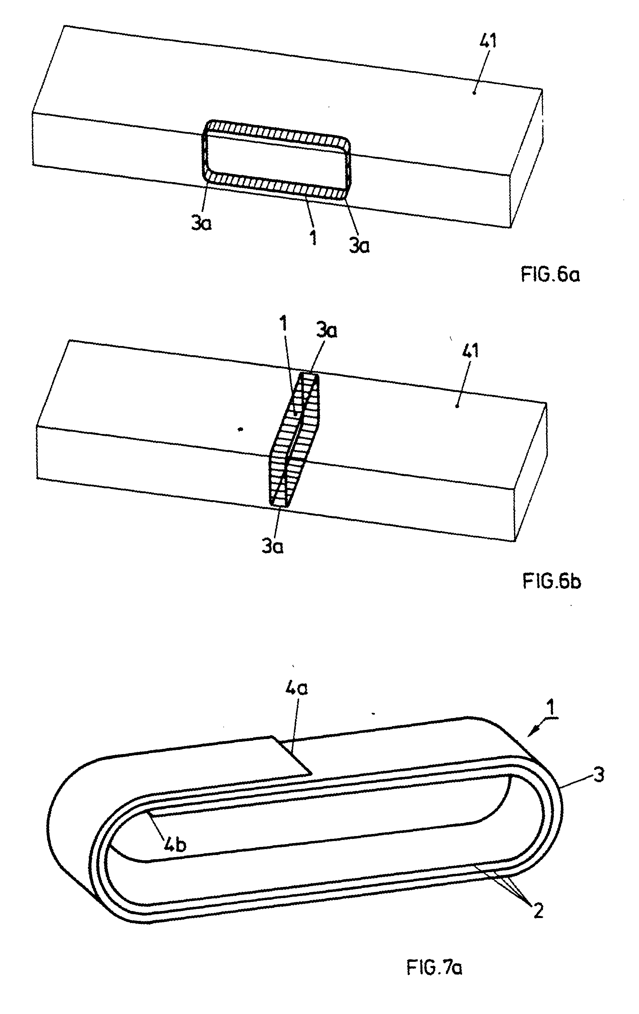

In den Fig. 6a und 6b ist eine weitere Anordnung eines schlaufenförmigen Verstärkungs- bzw. Zugelementes dargestellt, beispielsweise um ein Tragfunktionen erfüllendes Bauwerksteil 41 nachträglich in bezug auf Schub zu verstärken. Dabei kann das schlaufenförmige Verstärkungselement 1, wie in Fig. 6a dargestellt, in Längsrichtung verlaufend angeordnet sein, oder aber wie in Fig. 6b dargestellt, in Querrichtung in bezug auf das Bauwerksteil 41. Dabei zeigt sich nun deutlich beim Anordnen der schlaufenförmigen Schubverstärkungselemente 1, dass endständig keine halbkreisförmigen Schlaufen ausgebildet sind, sondern je zwei viertelkreisförmige Schlaufensegmente 3a. Die dabei bestehende Problematik in bezug auf die Verwendung einer oder mehrerer Schlaufenschichten bleibt aber dieselbe wie beim Ausbilden eines halbkreisförmigen Schlaufenendes. Im Zusammenhang mit der Schubverstärkung eines Tragfunktionen erfüllendes Bauwerksteiles 41 sei erneut auf die internationale Patentanmeldung WO93/20296 verwiesen.

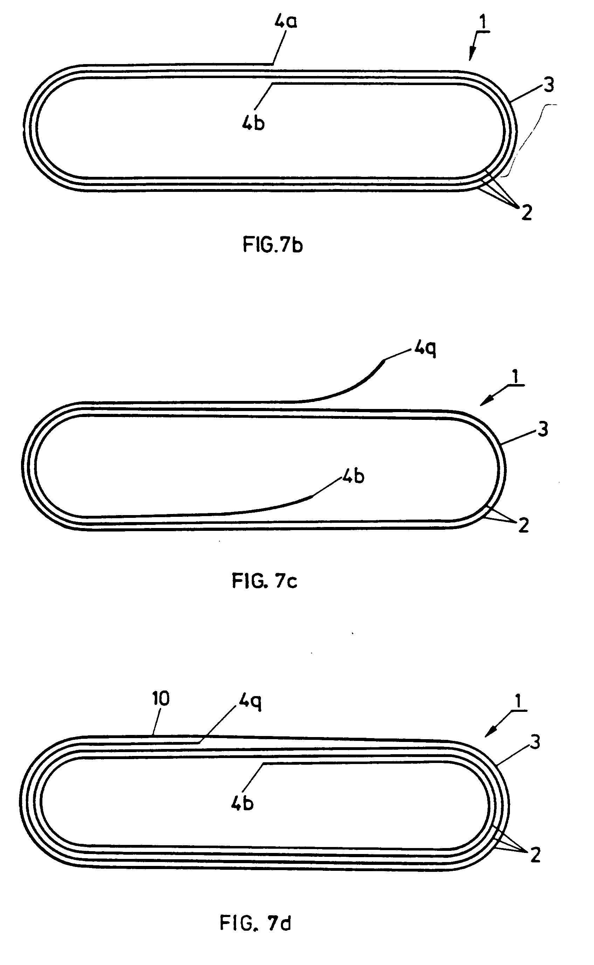

In den Fig. 7a und 7b ist ein schlaufenförmiges Verankerungs- bzw. Halteelement 1 dargestellt, umfassend mehrere, übereinander angeordnete Schlaufenschichten bzw. Schlaufenlagen 2. Dabei zeigt Fig. 7a das Verankerungselement 1 in Perspektive analog der Darstellung von Fig. 1, währenddem Fig. 7b das Verankerungselement 1 im Längsschnitt darstellt. Dabei sind deutlich die einzelnen Bandschichten bzw. Lagen 3 erkennbar, wobei die einzelnen Schichten bzw. Lagen durch ein einziges, längsausgedehntes Band gebildet werden. Die beiden Enden 4a und 4b dieses einzigen längsausgedehnten Bandes sind jeweils mit der direkt darunterliegenden bzw. daran anstossenden Schicht des schlaufenförmigen Elementes verbunden, beispielsweise durch Kleben, Schweissen oder unter Zuhilfenahme mechanischer Verbindungsmittel, wie Nieten, Schrauben und dgl.

Fig. 7c zeigt ein analoges schlaufenförmiges Verankerungselement bzw. Halteelement 1, aufweisend ein einziges längsausgedehntes Band, wobei jedoch die beiden Enden 4a und 4b lose belassen sind. In der Praxis hat es sich gezeigt, dass insbesondere bei der Verwendung des schlaufenförmigen Verankerungselementes bei Bauwerken das äussere Ende vorzugsweise beispielsweise im umliegenden Mauerwerk oder Fels verankert wird, währenddem das innere Ende lose belassen werden kann, da beim Anspannen des Verankerungselementes ein "Nachrutschen" in der innersten Bandschlaufe ausbleibt.

Fig. 7d zeigt wiederum ein schlaufenförmiges Verankerungselement 1, wobei für das "Befestigen" des äusseren Bandendes 4a eine Umhüllung 10 vorgesehen ist, welche beispielsweise aus einem weitgehendst schlaff anliegenden elastischen Material bestehen kann. Der Vorteil der Varianten, dargestellt in den Fig. 7c und 7d, liegt darin, dass beim Anspannen des Verankerungselementes 1 die über dem äusseren Ende 4a angeordnete Schlaufenschicht im Bereich der Verbindung mit dem äusseren Ende nicht übermässig beansprucht wird. Es hat sich in der Praxis gezeigt, dass bei übermässiger Beanspruchung der Schlaufe in den meisten Fällen ein Bruch der äussersten Schlaufe im Bereich der Verbindung mit dem äusseren Schlaufenende eintritt. Um diese Beanspruchung im Bereich des äusseren Endes zu reduzieren ist es aber auch möglich, das äussere Ende 4a beispielsweise mittels eines elastischen Klebers auf der darunterliegenden Bandschicht zu befestigen.

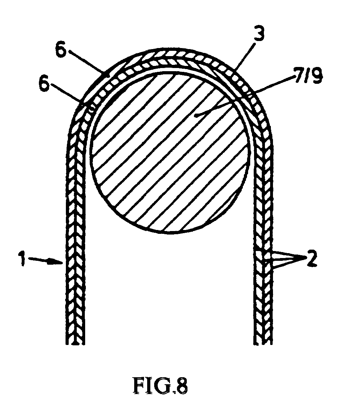

Damit der Vorteil des mehrlagigen Ausbildens eines schlaufenförmigen Verankerungselementes gegenüber einer Schlaufe mit dickerem Querschnitt voll wirksam wird, ist es wesentlich, dass auftretende Zugkräfte auch weitgehendst gleichmässig von den verschiedenen Schichten aufgenommen werden können. Dabei ist es wesentlich, wie bereits oben erwähnt, dass speziell im Bereich der endständiger Zugschlaufen bzw. Schlaufenbogen die einzelnen Schichten aneinander gleiten können. Dies wird beispielsweise dadurch ermöglicht, wie in Fig. 8 im Schnitt und schematisch dargestellt, dass zwischen den einzelnen Schichten 2 ein gleitfähiges Material 6 angeordnet wird, welches Material entweder zusätzlich zwischen den Schichten angeordnet wird, oder aber durch direktes Beschichten der einzelnen Bandschichten. Durch dieses Zusatzmaterial 6 wird einerseits verhindert, dass die einzelnen Bandschichten aneinander haften und andererseits wird sichergestellt, dass die einzelnen Schichten optimal auf- bzw. aneinander gleiten können.

Insbesondere bei der Verwendung eines schlaufenförmigen Verankerungselementes mit einem mehrfach geschlauften, einzigen, längsausgedehnten Band hat es sich gezeigt, dass es auch vorteilhaft sein kann, anstelle der Erhöhung des Gleitens auch ein Erhöhen der Reibung zwischen den einzelnen Bandschichten in den endständigen Schlaufen zu bewirken. Dies insbesondere bei den radial aussenliegenden Bandschichten, da diese Bandschichten stärker beansprucht werden als die innenliegenden Bandschichten. Diese Erhöhung der Reibung kann beispielsweise durch das Einlegen von Folien bewirkt werden, wie beispielsweise das Einlegen von sehr dünnen, sogenannten Trennfolien mit einer Foliendicke im Bereich von ca. 0,02 mm. Denkbar ist aber auch den Reibungskoeffizienten zu variieren, d.h. dass die Zwischenlagen zwischen den Schlaufenschichten im radial äusseren Bereich des Schlaufenendes einen höheren Reibungskoeffizienten aufweisen, währenddem insbesondere im mittigen Bereich des Schlaufenendes der Reibungskoeffizient kleiner ist bzw. dass ein erhöhtes Gleiten zwischen den Schichten möglich ist.

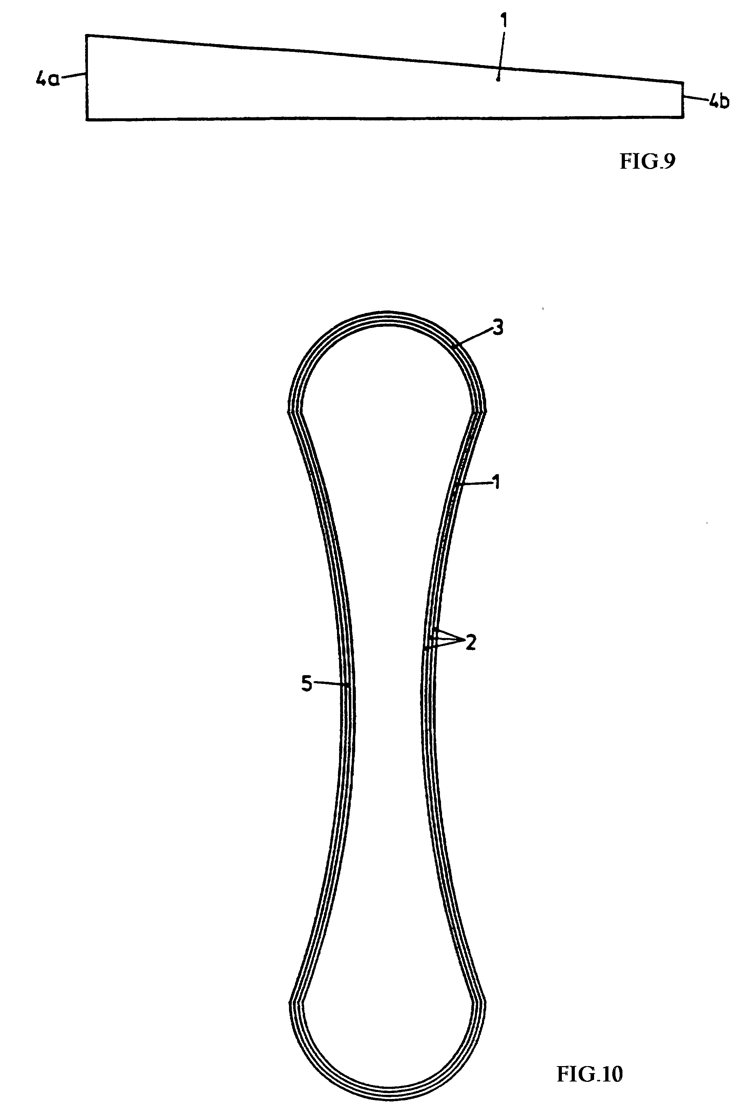

In Fig. 9 ist schematisch dargestellt, wie vorzugsweise im Falle der Verwendung eines einzigen, mehrfachgeschlauften Schlaufenbandes, wie in den Fig. 7a und 7b dargestellt, die Breite des Schlaufenbandes von der äusseren Schlaufenschicht zur innersten Schlaufenschicht verändert wird. Fig. 9 zeigt ein quasi "abgerolltes" Schlaufenband 1, verlaufend vom äusseren Schlaufenende 4a zum inneren Schlaufenende 4b. Um bei auftretenden Zugkräften auf die Zugschlaufe 1 eine möglichst gleichmässige Verteilung der einzelnen Zugkraftkomponenten auf die verschiedenen Schlaufen zu gewährleisten ist vorzugsweise die Breite der äussersten Schlaufe breiter als diejenige der innersten Schlaufe. Da ein abgestuftes Verringern der Bandbreite vom äusseren Ende 4a zum inneren Bandende 4b problematisch ist, wird bevorzugt die Breite vom äusseren Ende 4a zum inneren Bandende 4b kontinuierlich verringert, wie in Fig. 9 dargestellt.

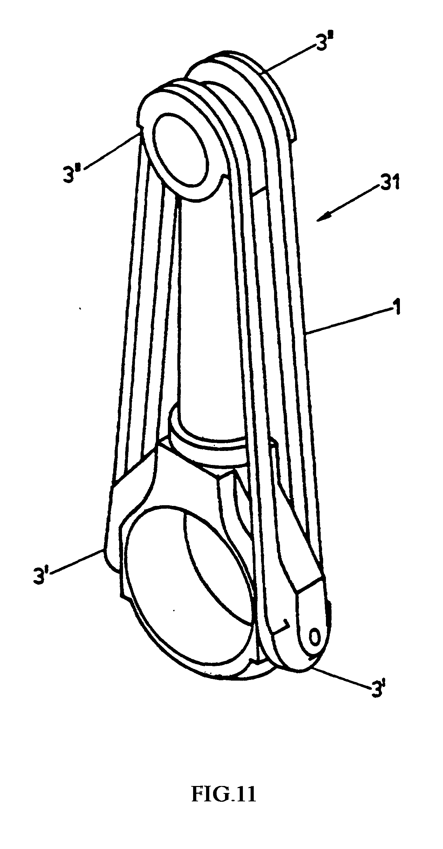

Eine andere Möglichkeit um möglichst eine gleichmässige Kräfteverteilung in den verschiedenen Schlaufenlagen zu erzielen ist schematisch im Schnitt in Fig. 10 dargestellt, indem ebenfalls die beiden längsausgedehnten, die beiden Endschlaufen 3 verbindenden Schenkel 5 des Halte- bzw. Zugelementes 1 gebogen werden. Durch diese, wie in Fig. 10 dargestellte, Einwärtsbiegung werden die Längenunterschiede zwischen den verschiedenen Schichten 2 beim Auftreten von Zugkräften minimal. Wesentlich ist jedoch erneut, dass die verschiedenen Schichten nicht aneinander haftend in der erfindungsgemässen Zugschlaufe 1 angeordnet sind.

Eine andere Möglichkeit der gleichmässigen Kraftverteilung besteht auch darin, dass der Zugmodul variiert wird, d.h. dass beispielsweise bei Verwenden von mehreren, ineinandergeschlauften Endlosschlaufen der Zugmodul von Schlaufe zu Schlaufe variiert. Bei Verwendung eines einzigen mehrfachgeschlauften Schlaufenbandes kann durch beispielsweise Verändern des Anteiles von Verstärkungsfasern bzw. des Modulwerkstoffes der Zug- oder E-Modul von innen nach aussen verändert werden, um wiederum eine gleichmässige Kraftverteilung zwischen den verschiedenen Schlaufenschichten zu erzielen.

In den Fig., 11 und 12 sind schematisch zwei mögliche weitere Anwendungen von erfindungsgemässen Halteelementen bzw. Zugschlaufen dargestellt. Anhand dieser Beispiele soll weiter verdeutlicht werden, in welch verschiedenartigen Anwendungen das erfindungsgemäss definierte Halte- bzw. Zugelement Verwendung finden kann.

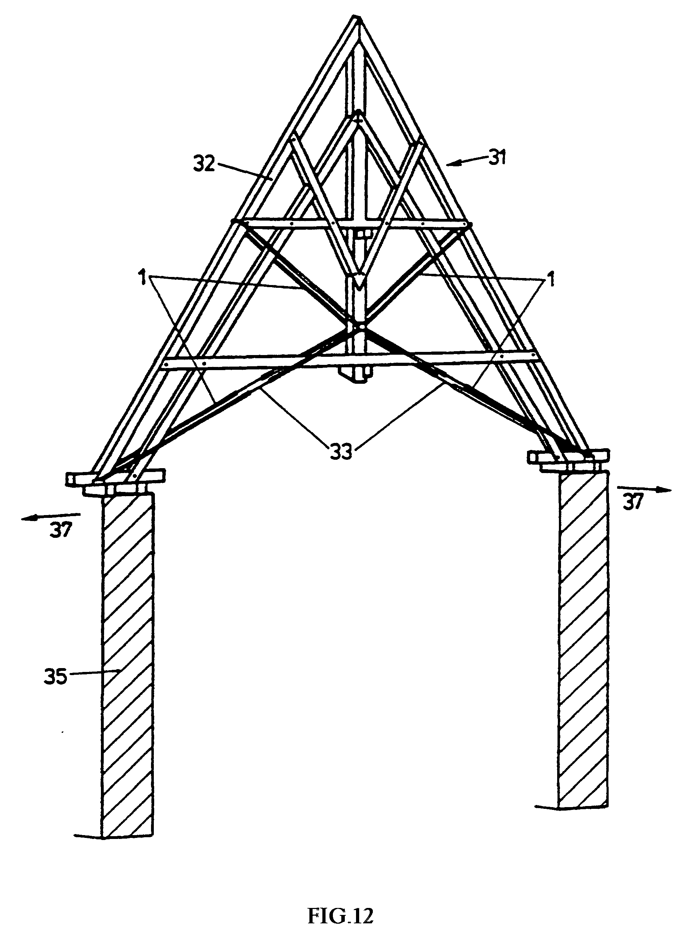

In Fig. 11 ist schematisch eine Pleuelstange 31 dargestellt, welche ein erfindungsgemäss ausgebildetes Zugelement 1 aufweist, welches nun nicht nur zwei endständige Schlaufungen aufweist, sondern zwei endständige Schlaufungen 3' und zwei mittige Schlaufungen 3". Bei Konstruktions- bzw. Maschinenteilen, wie beispielsweise der in Fig. 11 dargestellten Pleuelstange hat es sich nämlich gezeigt, dass seitlich am Maschinenteil gestützte Schlaufen wesentlich höhere Lasten tragen können als dies beispielsweise durch die mittig verlaufende Pleuelstange der Fall ist. Damit wird es möglich, Maschinenteile anstelle von Gusseisen, beispielsweise aus kohlenstoffaser-verstärkten Kunststoffen herzustellen, und die dadurch entstehende Verringerung der Belastbarkeit, beispielsweise mittels seitlich gestützten Schlaufen, aufgebaut aus dünmen Lagen ohne Verbund, zu kompensieren. Auch diese schlaufenförmigen Zugelemente können, wie oben erwähnt, beispielsweise aus faserverstärkten Kunststoffen hergestellt werden, vorzugsweise aus C-Fasern mit thermoplastischer Matrix oder aber aus anderen geeigneten Materialien. Auch im Falle von Maschinenteilen kann es vorteilhaft sein, wenn die verwendeten, schlaufenförmigen Elemente mehrschichtig ausgebildet sind, um speziell im endständigen Bereich der Zugschlaufenrundungen oder aber, wie im dargestellten Beispiel in Fig. 11, auch im mittigen Bereich der Schlaufungen höhere Zugfestigkeiten zu erreichen. Somit ist es möglich, mittels erfindungsgemäss vorgeschlagener, schlaufenförmiger Halteelemente im Maschinen- und Apparatebau erhöhte Festigkeit zu erzielen bzw. Kräfte einzuführen bzw. abzulenken, und damit die entsprechenden Maschinen- und Apparateteile leichter mittels einer sogenannten Leichtbauweise zu fertigen.

Eine ganz andere Anwendung ist in Fig. 12 dargestellt, wo schematisch und vereinfacht die Stabilisierung eines Bauwerkes bzw. einer Dachkonstruktion dargestellt ist. Die Dachkonstruktion 31, bestehend aus in bekannter Art und Weise miteinander verbundenen Holzpfosten, Pfetten, usw. liegt auf Seitenwänden 35 auf, beispielsweise Seitenwände eines zu sanierenden Bauwerkes, wie einer Kirche, einer grösseren Halle eines schlossartigen Bauwerkes und dgl. In der Regel sind derartige Mauern 35 von sanierungsbedürftigen Bauwerken nicht mehr in der Lage, die durch das Aufliegen des Dachstuhles 31 nach aussen wirkenden und mit Pfeilen 37 dargestellten Kräfte aufzufangen, weshalb die Gefahr des Einstürzens der beiden Aussenmauern 35 besteht. Durch das Anbringen von erfindungsgemässen Zugelementen 1 in der Dachkonstruktion 31, wie in Fig. 12 dargestellt, ist es nun möglich, die durch den Dachstuhl auf die beiden Mauern 35 ausübenden Rräfte aufzufangen. Um die Halte- bzw. Zugelemente 1 zu spannen können mittige Spanner 33 verwendet werden, wie in Fig. 12 dargestellt.

Bei den in den Fig. 4, 11 und 12 dargestellten Beispielen handelt es sich selbstverständlich nur um einige Anwendungsmöglichkeiten, weitere Anwendungen sind natürlich auch möglich.

So ist es beispielsweise auch möglich, einen Webschaft mittels erfindungsgemässen Halte- bzw. Zugelementen zu verstärken, um ein Durchbiegen zu verhindern. Dadurch wird es aber auch möglich, massive Maschinenrahmenkonstruktionen wesentlich leichter zu bauen bzw. Leichtbauwerkstoffe zu verwenden, und zusätzlich den Maschinenrahmen mittels den erwähnten, erfindungsgemässen Halte- bzw. Zugelementen zu verstärken. Auch Bauwerke, beispielsweise in erdbebengefährdeten Gebieten, können mittels erfindungsgemässen Halte- oder Zugelementen verstärkt werden.

Bei den Darstellungen in den Fig. 1 bis 12 handelt es sich selbstverständlich nur um Beispiele, welche auf x-beliebige Art und Weise ergänzt, modifiziert oder abgeändert werden können. Insbesondere die für die Herstellung der schlaufenförmigen Elemente vorgeschlagenen Materialien beziehen sich auf spezifische Beispiele, welche entsprechend weiterer Anwendungsmöglichkeiten angepasst werden können. Ob es sich bei den Verstärkungsfasern um Kohlenstoffasern, Glasfasern, Aramidfasern oder andere Verstärkungsmittel handelt, und ob als Matrix Epoxydharze, Polyurethanharze, PEEK, PA, PP, PPS (Polyphenylensulfid) usw. verwendet werden, ist schlussendlich eine Frage der Anforderungen an das zu verwendende schlaufenförmige Element. Es ist aber auch möglich, Metallbänder für die Herstellung eines schlaufenförmigen Elementes zu verwenden. Auch die endständige Verankerung des schlaufenförmigen Elementes kann auf vielfältigste Art und Weise gewählt werden.

## Patentansprüche

1. Vorrichtung zum Verankern, Schubverstärken, Befestigen und/oder Zusammenhalten von Bau- und Maschinenteilen, Konstruktionsteilen, und Bauwerken, und Teilen davon und/oder zum Einleiten einer Zug-Kraftkomponente, umfassend mindestens ein schlaufenartiges Verankerungs- bzw. Zugelement (1), welches aus einem faserverstärkten Kunststoff gefertigt ist, wobei das schlaufenartige Element mehrere übereinanderliegende Schlaufen- bzw. Bandschichten bzw. Lagen (2) aufweist, wobei die Schlaufen bzw. Bandschichten bzw. Lagen durch ein einziges Band gebildet werden, welches mehrfach übereinander geschlauft ist, und wobei die beiden Enden (4a, 4b) des Bandes je mit der direkt benachbarten Schlaufen- bzw. Bandschicht verbunden sind, oder lose an dieser anliegen.

2. Vorrichtung Anspruch 1, **dadurch gekennzeichnet, dass** das schlaufenförmige Element (1) längsausgedehnt ist und je endständig einen wenigstens nahezu kreisrund ausgebildeten Zugschlaufenbogen (3, 3', 3") bzw. Segmente (3a) davon aufweist, vorgesehen, um beispielsweise auf einer gewölbten Oberfläche eines Lager- oder Verankerungsorganes (7, 9) aufzuliegen.

3. Vorrichtung nach einem der Ansprüche 1 oder 2, **dadurch gekennzeichnet, dass** die übereinanderliegenden Schlaufen bzw. Bandschichten bzw. Lagen (2) wenigstens im Bereich der beiden endständigen Zugschlaufen nicht aneinanderhaftend ausgebildet sind.

4. Vorrichtung nach einem der Ansprüche 1 bis 3, **dadurch gekennzeichnet, dass** die Schichten bzw. Lagen wenigstens in den beiden End- oder Auflagebereichen der Schlaufen bzw. im Bereich der sogenannten Zugschlaufenbogen eine Zwischenschicht aufweisen, damit die einzelnen Schichten bzw. Lagen bei Auftreten hoher Zugkräfte aufeinander bzw. aneinander besser gleiten können.

5. Vorrichtung nach einem der Ansprüche 1 bis 4, **dadurch gekennzeichnet, dass** die Bandbreite des einzigen Bandes, bildend die mehrfach übereinander geschlauften Schlaufen bzw. Bandschichten vom äusseren Ende (4a) kleiner werdend ausgebildet ist nach innen verlaufend zum inneren Bandende (4b).

6. Vorrichtung nach einem der Ansprüche 1 bis 5, **dadurch gekennzeichnet, dass** der Zug- bzw. E-Modul von Schicht zu Schicht unterschiedlich ist.

7. Vorrichtung nach einem der Ansprüche 1 bis 6, **dadurch gekennzeichnet, dass** das schlaufenförmige Element bzw. die Schichten oder Lagen aus einem kohlenstoffaser-verstärkten Kunststoff gefertigt sind.

8. Vorrichtung nach einem der Ansprüche 1 bis 7, **dadurch gekennzeichnet, dass** zwischen den Schichten bzw. Lagen wenigstens im Bereich der endständigen Schlaufen bzw. Zugschlaufen ein nichthaftendes Material (6) mit unterschiedlichem Reibungskoeffizient angeordnet bzw. eingelegt ist, wie insbesondere ein Teflonbelag oder eine dünne Trennfolie.

9. Vorrichtung nach einem der Ansprüche 1 bis 8, **dadurch gekennzeichnet, dass** das schlaufenartige Verankerungs- bzw. Zugelement (1) durch eine wenigstens nahezu schlaffe und elastische oder flexible äussere Schicht (10) eingehüllt ist.

10. Stabilisierungselement bzw. Schubverstärkungselement an Bauwerken, umfassend eine Vorrichtung nach einem der Ansprüche 1 bis 9.

11. Bau- oder Maschinenteile für das Übertragen von Zug-Kraftkomponenten, umfassend eine Vorrichtung nach einem der Ansprüche 1 bis 9 für das Dämpfen von auftretenden Zug- bzw. Druckbelastungen.

12. Pleuelstange (31) für Verbrennungsmotoren, umfassend eine Vorrichtung nach einem der Ansprüche 1 bis 9.

13. Verfahren zum Herstellen eines schlaufenförmigen Verankerungs- bzw. Zugelementes, geeignet für eine Vorrichtung nach einem der Ansprüche 1 bis 9, **dadurch gekennzeichnet, dass** ein dünnwandiges, längsausgedehntes Band in eine mehrfach übereinanderliegende längsausgedehnte Anordnung (1) geschlauft wird, wobei die beiden Enden des Bandes (4a, 4b) jeweils mit dem benachbarten, direkt anliegenden bzw. darunterliegenden Band verbunden werden.

14. Verfahren nach Anspruch 13, **dadurch gekennzeichnet, dass** ein längsausgedehntes, dünnwandiges Band, bestehend aus einem faserverstärkten Duroplasten mit thermoplastischen bzw. flexiblen Eigenschaften oder einem faser-verstärkten Thermoplasten in eine mehrfach übereinanderliegende, längsausgedehnte Schlaufenanordnung geschlauft wird, wobei die beiden Enden des Bandes jeweils mit dem benachbarten, direkt anliegenden Teil des Bandes mittels Schweissen, Kleben oder mechanisch verbunden werden, und gegebenenfalls anschliessend die geschlaufte Anordnung nach deren Spannen mittels Wärme, Licht, Infrarot- oder UV-Bestrahlung, und/oder anderen geeigneten Beeinflussungsmethoden behandelt wird, um im Bandmaterial eine Vernetzungsreaktion bzw. Versteifungsreaktion auszulösen.

15. Verwendung einer Vorrichtung nach einem der Ansprüche 1 bis 9 als Maueranker, Felsanker oder Anker im Brückenbau.

16. Verfahren zum Anordnen einer Vorrichtung nach einem der Ansprüche 1 bis 9 als Felsanker, **dadurch gekennzeichnet, dass** ein Verankerungs- bzw. Zugelement (1) in ein vorgefertigtes Bohrloch (25) eingeführt wird, der im Bohrloch eingeführte endständige Zugschlaufenbogen (3) des Verankerungselementes befestigt bzw. verankert wird, das Bohrloch anschliessend mittels einer geeigneten Masse (15) vergossen wird und schlussendlich die aus dem Untergrund ragende Zugschlaufe durch geeignete Mittel (9) verankert wird.

## Claims

1. Device for the anchoring, shear strengthening, fastening and/or holding-together of building and machine parts, structural parts and buildings and parts thereof and/or for the introduction of a tractive-force component, comprising at least one loop-like anchoring or traction element (1) which is manufactured from a fibre-reinforced plastic, the loop-like element having a plurality of loop or band layers or plies (2) lying one above the other, the loops or band layers or plies being formed by a single band which is multiply looped over itself, and the two ends (4a, 4b) of the band being connected in each case to the directly adjacent loop or band layer or resting loosely against the latter.

2. Device according to Claim 1, **characterized in that** the loop-shaped element (1) is elongated and has at each end an at least virtually circular traction loop arc (3, 3', 3'') or segments (3a) thereof, in order, for example, to lie on a curved surface of a bearing or anchoring member (7, 9).

3. Device according to one of Claims 1 or 2, **characterized in that** the loops or band layers or plies (2) lying one above the other are designed, at least in the region of the two end traction loops, so as not to adhere to one another.

4. Device according to one of Claims 1 to 3, **characterized in that** the layers or plies have an intermediate layer at least in the two end or bearing regions of the loops or in the region of the so-called traction loop arc, so that the individual layers or plies can slide more effectively one on the other or against one another when high tractive forces occur.

5. Device according to one of Claims 1 to 4, **characterized in that** the bandwidth of the single band, forming the loops or band layers multiply looped one over the other, is designed to decrease from the outer end (4a) inwards towards the inner band end (4b).

6. Device according to one of Claims 1 to 5, **characterized in that** the traction or elasticity module differs from layer to layer.

7. Device according to one of Claims 1 to 6, **characterized in that** the loop-shaped element or the layers or plies are manufactured from a carbon-fibre-reinforced plastic.

8. Device according to one of Claims 1 to 7, **characterized in that**, between the layers or plies is arranged or inserted, at least in the region of the end loops or traction loops, a non-adhesive material (6) with a different coefficient of friction, such as, in particular, a Teflon coating or a thin separating film.

9. Device according to one of Claims 1 to 8, **characterized in that** the loop-like anchoring or traction element (1) is encased in an at least virtually slack and elastic or flexible outer layer (10).

10. Stabilizing element or shear-strengthening element on buildings, comprising a device according to one of Claims 1 to 9.

11. Parts of buildings or machine parts for the transmission of tractive-force components, comprising a device according to one of Claims 1 to 9 for the damping of tractive or compressive loads which occur.

12. Connecting rod (31) for internal combustion engines, comprising a device according to one of claims 1 to 9.

13. Method for producing a loop-shaped anchoring or traction element, suitable for a device according to one of Claims 1 to 9, **characterized in that** a thin-walled elongated band is looped into an elongated arrangement (1) lying multiply over itself, the two ends of the band (4a, 4b) in each case being connected to the adjacent band resting directly against or under the latter.

14. Method according to Claim 13, **characterized in that** an elongated thin-walled band, consisting of a fibre-reinforced duroplastic with thermo-plastic or flexible properties or of a fibre-reinforced thermoplastic, is looped into an elongated loop arrangement lying multiply over itself, the two ends of the band in each case being connected by means of welding, adhesive bonding or mechanically to the adjacent band part lying directly against the latter, and, if appropriate, the looped arrangement, after being tensioned, subsequently being treated by means of heat, light, infrared or UV radiation and/or other suitable influencing methods, in order to trigger a cross-linking reaction or stiffening reaction in the band material.

15. Use of a device according to one of Claims 1 to 9 as a wall anchor, rock anchor or anchor in bridge building.

16. Method for arranging a device according to one of Claims 1 to 9 as a rock anchor, **characterized in that** an anchoring or traction element (1), is introduced into a prefabricated drillhole (25), the end traction-loop arc, introduced in the drillhole, of the anchoring element is fastened or anchored, the drillhole is subsequently sealed by means of a suitable compound (15), and, finally, the traction loop projecting from the substrate is anchored by suitable means (9).

## Revendications

1. Dispositif pour l'ancrage, le renforcement, en présence d'un cisaillement, la fixation et/ou la réunion de pièces de construction, de pièces de machine, de parties de construction, de bâtiments et d'éléments de ceux-ci et/ou pour l'introduction d'une composante de force de traction, comprenant au moins un élément d'ancrage ou de traction en forme de boucle (1) qui est fabriqué à partir d'une matière plastique renforcée par des fibres, étant précisé que l'élément en forme de boucle a plusieurs couches en forme de boucle ou de bande superposées (2), que ces couches sont définies par une seule bande qui est pliée plusieurs fois sur elle-même en boucle, et que chacune des deux extrémités (4a, 4b) de la bande est reliée à la couche directement voisine ou est appliquée de façon lâche sur celle-ci.

2. Dispositif selon la revendication 1, **caractérisé en ce que** l'élément en forme de boucle (1) a une forme allongée et présente à chaque extrémité une courbe de boucle de traction (3, 3', 3") de forme au moins approximativement ronde ou des segments (3a) de cette courbe qui sont destinés à être posés par exemple sur une surface courbe d'un organe d'appui ou d'ancrage (7, 9).

3. Dispositif selon la revendication 1 ou 2, **caractérisé en ce que** les boucles superposées ou les couches en forme de bandes (2), au moins dans la zone des deux boucles de traction prévues aux extrémités, n'adhèrent pas entre elles.

4. Dispositif selon l'une des revendications 1 à 3, **caractérisé en ce que** les couches, au moins dans les deux zones d'extrémité ou d'appui des boucles ou dans la zone de ce qu'on appelle les courbes de boucles de traction, présentent une couche intermédiaire pour que les couches individuelles puissent mieux glisser les unes sur les autres ou les unes contre les autres lorsque des forces de traction élevées apparaissent.

5. Dispositif selon l'une des revendications 1 à 4, **caractérisé en ce que** la largeur de la bande unique qui forme les boucles ou couches superposées va en diminuant de l'extrémité extérieure (4a) vers l'extrémité intérieure (4b), vers l'intérieur.

6. Dispositif selon l'une des revendications 1 à 5, **caractérisé en ce que** le module de traction ou d'élasticité est différent d'une couche à l'autre.

7. Dispositif selon l'une des revendications 1 à 6, **caractérisé en ce que** l'élément en forme de boucle ou les couches sont fabriqués à partir d'une matière plastique renforcée par des fibres de carbone.

8. Dispositif selon l'une des revendications 1 à 7, **caractérisé en ce qu'**un matériau non adhérent (6) présentant un coefficient de frottement différent est disposé ou inséré entre les couches, au moins dans la zone des boucles ou boucles de traction d'extrémité, notamment un revêtement en téflon ou un mince film de séparation.

9. Dispositif selon l'une des revendications 1 à 8, **caractérisé en ce que** l'élément d'ancrage ou de traction en forme de boucle (1) est enveloppé dans une couche extérieure (10) au moins approximativement lâche et élastique ou flexible.

10. Dispositif stabilisateur ou élément de renforcement en présence d'un cisaillement sur des bâtiments, comprenant un dispositif selon l'une des revendications 1 à 9.

11. Pièces de construction ou pièces de machine pour transmettre des composantes de force de traction, comprenant un dispositif selon l'une des revendications 1 à 9 pour amortir les contraintes de traction ou de pression qui apparaissent.

12. Bielle (31) pour des moteurs à combustion interne, comprenant un dispositif selon l'une des revendications 1 à 9.

13. Procédé pour fabriquer un élément d'ancrage ou de traction en forme de boucle approprié pour un dispositif selon l'une des revendications 1 à 9, **caractérisé en ce qu'**on forme une boucle avec une bande allongée à paroi mince pour obtenir une structure allongée multicouche (1), chacune des deux extrémités de la bande (4a, 4b) étant reliée à la bande voisine appliquée directement contre elle ou située sous elle.

14. Procédé selon la revendication 13, **caractérisé en ce qu'**on forme une boucle avec une bande allongée à paroi mince composée d'une matière thermodurcissable renforcée par des fibres et présentant des propriétés thermoplastiques ou flexibles, ou d'un thermoplastique renforcé par des fibres, pour obtenir une structure en boucle allongée multicouche, étant précisé que chacune des deux extrémités de la bande est reliée par soudage, par collage ou mécaniquement à la partie de la bande voisine ou appliquée directement sur elle, et qu'ensuite, on traite éventuellement la structure en boucle, après l'avoir tendue, avec de la chaleur, de la lumière ou un rayonnement infrarouge ou UV, et/ou avec d'autres méthodes adéquates pour l'influencer, afin de déclencher une réaction de réticulation ou de renforcement dans le matériau en bande.

15. Utilisation d'un dispositif selon l'une des revendications 1 à 9 comme tirant d'ouvrage, tirant de roche ou élément d'ancrage dans la construction de ponts.

16. Procédé pour disposer un dispositif selon l'une des revendications 1 à 9 comme tirant de roche, **caractérisé en ce qu'**on introduit un élément d'ancrage ou de traction (1) dans un trou (25) percé préalablement, on fixe ou on ancre la courbe de boucle de traction (3) de l'élément d'ancrage située côté extrémité et introduite dans le trou, on coule ensuite dans ce trou une masse appropriée (15) et enfin on ancre la boucle de traction dépassant du support à l'aide de moyens appropriés (9).
